Europäisches Patentamt

**European Patent Office**

Office européen des brevets

(19)

(11) Publication number: **0 026 082**
**B1**

(12) **EUROPEAN PATENT SPECIFICATION**

(45) Date of publication of patent specification: **20.07.83**

(51) Int. Cl.³: **B 23 B 51/06, B 23 B 31/04**

(21) Application number: **80303253.1**

(22) Date of filing: **16.09.80**

(54) **Drill.**

(30) Priority: **21.09.79 GB 7932751**

(43) Date of publication of application:
**01.04.81 Bulletin 81/13**

(45) Publication of the grant of the patent:
**20.07.83 Bulletin 83/29**

(84) Designated Contracting States:
**DE FR GB IT SE**

(56) References cited:
**DE - A - 1 602 794**
**DE - A - 1 752 019**
**DE - A - 2 252 275**
**DE - A - 2 620 430**
**DE - A - 2 750 367**
**DE - U - 7 427 520**
**GB - A - 1 383 090**
**US - A - 2 986 960**
**US - A - 4 135 847**

(73) Proprietor: **WIMET LIMITED**
**Torrington Avenue**
**Tile Hill Coventry (GB)**

(72) Inventor: **Allen, William Douglas**
**22, Tintern Road Allington Park**
**Maidstone Kent (GB)**

(74) Representative: **Ellis, John Clifford Holgate et al,**
**MEWBURN ELLIS & CO. 2/3 Cursitor Street**
**London EC4A 1BQ (GB)**

Courier Press, Leamington Spa, England

Drill

This invention relates to drills of the type having a tubular shank of flattened or otherwise shaped cross-section with a drilling tip at one end. The shank is usually made by deforming a tube of circular cross-section; a suitable cross-section for the deformed tube is that of a figure-of-eight, the interior of the tube being used for the passage to the tip of coolant flushing liquid which returns (together with cutting chips) along the passage left between the hole which has been drilled and the shank. However, other profiles than a figure-of-eight, e.g. a D-profile, can be employed.

In order for the drill to be held in the chuck or collect of a machine the end of the drill remote from the drilling tip must have a circular external cross-section of convenient size. A usual way of providing this is to insert one end of the shank into and solder or braze it into a cylindrical-sleeve, as shown, for example, in the drawings of United Kingdom Patent Specification No. 1 383 090. In order to ease manufacture and assembly in the sleeve, the shank of the drill is left with a portion of circular cross-section at the end remote from the bit. However leaving this cylindrical portion of the shank remote from the tip causes manufacturing and stocking problems, and it would be more desirable to be able to use drill shanks having a constant cross-section throughout their length.

If the cross-section of the drill shank is to remain constant throughout its length, some kind of holder is required to encompass the non-circular section remote from the tip. One such holder, shown in United Kingdom Patent Specification No. 1 543 144, incorporates apertured resilient blocks within which the shank is held.

An object of the invention is to provide a drill having a tubular shank with a non-circular cross-section with a satisfactory holder to enable it to be held in the chuck or collet of a machine. A further object of the invention is to provide a drill which allows for a speedy changeover in a machine between one diameter of drill and another diameter.

The drill of the present invention is as defined in the appended claim 1, in particular being characterised in that the holder comprises a body of plastics material which is bonded to the shank by moulding around the end of the shank remote from the drilling tip so as to prevent relative movement between the body and the shank, and a metal casing within which the body is lodged, means being provided to prevent rotational movement of the body relative to the casing. The body of plastics material may have an exterior surface, the greater part of which is cylindrical in form so that it fits within a cylindrical interior of the metal casing, some kind of key being provided to prevent relative rotation of the two parts. It is preferred that the plastics body does not extend rearwardly beyond the end of the shank of the drill: if it does so extend, there must clearly be a central bore left to enable the cooling and flushing fluid to flow to the interior of the drill shank.

One form of the invention is illustrated in the accompanying drawing wherein:

Fig. 1 is an exploded view of the drill;

Fig. 2 is a side view of the drill and shank and encompassing plastics body; and

Fig. 3 is an assembled view.

In all the figures the front end, i.e. the tip end, of the drill shank has been omitted. The tip of the drill has one or more hard metal tips which can be brazed to the drill shank in a manner well known to those skilled in the art.

The illustrated drill comprises a flattened tubular shank 11 of figure-of-eight cross-section which remains constant from the tip end to the rear. The tip end incorporates a hard metal element which may be brazed to the end of the shank in the manner illustrated in United Kingdom Patent Specification 1 383 090.

The end of the shank is formed with a body 13 of plastics material formed by moulding round the shank. The greater part of the surface of the body 13 is cylindrical in form, and incorporates an integral collar 12, though a recess or recesses 14 may be formed to give a more constant thickness to the plastics material as seen in cross-section and thus reduce variations that arise in the shrinkage which occurs in the moulding process. The shape of the mould provides an integral drive key 15 in the form of a protuberance from the cylindrical surface of the plastics body. The plastics body 13 is receivable in a hollow cylindrical metal casing 16 provided with a drive slot 17 to accommodate the key 15. The metal casing is open at each end, but at the end adjacent the drive slot 17 it has an integral externally threaded collar 18 on which can be screwed a lock nut 19. The rear end of the lock nut 19 has an internal flange 20 in the form of an annulus whose central hole has a diameter less than the diameter of the collar 12.

A variety of plastics materials may be used for moulding the body 13. We have used with success a glassfilled acetal resin containing 25% glass filaments, but a number of other suitable resins are available, as will be well known to those skilled in the art. As regards the metal casing 16, steel is the preferred material for its manufacture.

To assemble the drill the plastics body 13 is inserted into the metal casing 16 with the drive key 15 in the drive slot 17 until the collar 12 abuts the outer end of the threaded collar 18. The lock nut 19 is then applied and screwed firmly on the metal casing, thus trapping the collar 12 between the threaded collar 18 of the metal casing 16 and the flange 20 of the lock nut 19.

Clearly one size of metal casing 16 can be used for a number of different sizes of drill shank, provided that the range of drill shanks is such that the plastics body can have an external diameter to fit the metal casing. Thus, if desired, a single metal casing 16 can be used for a plurality of drills. Moreover, by adhering to one metal casing diameter for a number of different diameters of drill shank, changeover in a drilling machine of one drill for another drill is facilitated.

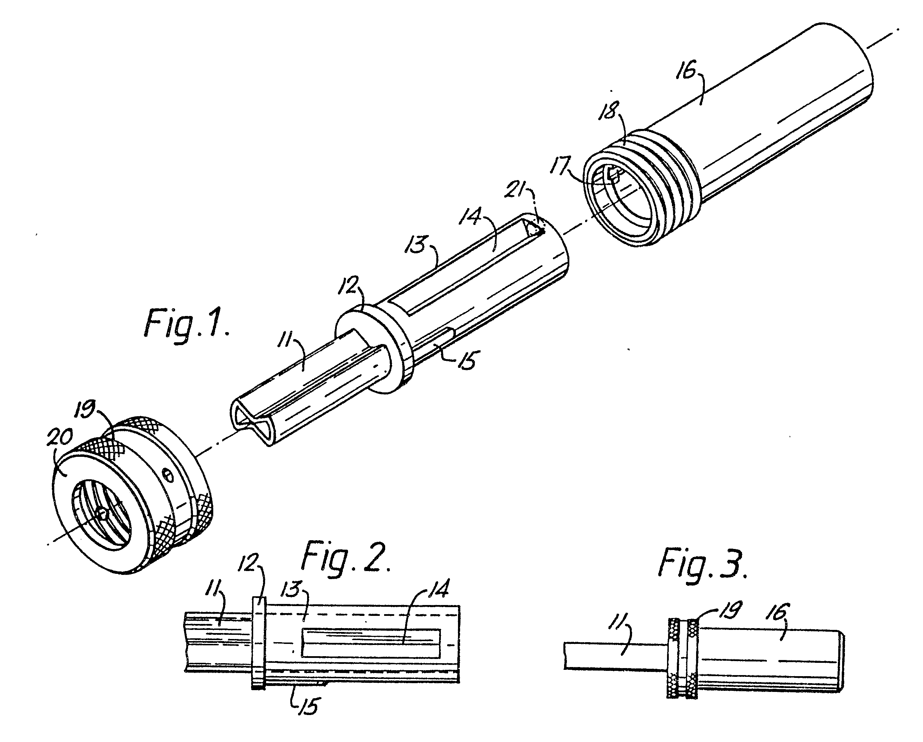

With the arrangement described the flushing liquid passes through the open end of the casing 16 and so into the interior of the hollow tubular shank 11. In an alternative arrangement the end of the casing 16 (that is, the right-hand end as seen in the drawings) can be closed and the flushing liquid led into the recess 14 or recesses 14 through a hole or holes in the cylindrical part of the casing 16. In this case a bore is made, such as that shown at 21 in broken lines in Fig. 1, to lead the flushing liquid into a space between the right-hand end of the plastics body 13 and the closed end of the casing, whence it can flow into the interior of the hollow tubular shank 11.

Our attention has been drawn to United Kingdom Patent No. 1 542 573 which describes a drill having a plastics holder for gripping within a chuck or collet. This earlier invention relates to drills having a cylindrical shank, more specifically to cylindrical drills with very small diameter, and in order to key the cylindrical drill shank to the plastics holder, the end portion of the drill includes a segment which is shaped to render at least a part of that portion substantially non-circular in cross-section. As already mentioned, the present invention relates to drills having a tubular shank which is non-circular in cross-section, thus obviating any special shaping of the shank where the plastics body is to be moulded round it. Moreover , by the provision of an outer metal casing we obviate the necessity for any very careful shaping of the plastics body, it being enough that this can be fitted without play into the outer metal casing and that a key or other means is provided to prevent relative rotational movement of the two parts.

## Claims

1. A drill comprising a tubular shank of non-circular cross-section having at one end a hard metal drilling tip and at the other end a holder, the exterior of which is of circular cross-section, to enable the drill to be held in a chuck or collet of a machine, means being provided in the holder to allow access of flushing liquid to the end of the shank so that flushing liquid can be supplied through the shank to the drilling tip, characterised in that the holder comprises a body of plastics material which is bonded to the shank by moulding around the said other end of the shank so as to prevent relative movement between the body and the shank, and a metal casing within which the body is lodged, means being provided to prevent rotational movement of the body relative to the casing.

2. A drill according to claim 1 wherein the said means to prevent relative rotational movement comprises a key in the form of a protuberance on the plastics body which fits in a slot in the metal casing.

3. A drill according to claim 1 or claim 2 wherein one end of the metal casing is exteriorly threaded, the plastics body is moulded with an integral collar to abut the threaded end of the metal casing and the parts are held tight in a lock nut which abuts the collar and is threaded on the metal casing.

4. A drill according to any one of the preceding claims wherein the end of the metal casing remote from the drill bit is open.

5. A drill according to any one of the preceding claims wherein the plastics body is formed with at least one recess longitudinal of the drill shank, the recess stopping short of the ends of the body.

6. A drill according to claim 5 having a bore between the end of the recess and the end of the body remote from the drill bit.

## Revendications

1. Mèche comprenant une queue tubulaire de coupe transversale non circulaire ayant à une extrémité un bout de percement en métal due et à l'autre extrémité un support, dont l'extérieur est de coupe transversale circulaire, pour permettre à la mèche d'être maintenue dans un mandrin ou un collet d'une machine, un moyen étant prévu dans le support pour permettre l'accès d'un liquide de chasse à l'extrémité de la queue afin que le liquide de chasse puisse être amené à travers la queue au bout de percement, caractérisée en ce que le support comprend un corps en matière plastique qui est joint à la queue per moulage autour de ladite autre extrémité de la queue afin d'empêcher un mouvement relatif entre le corps et la queue, et un boîtier en métal dans lequel le corps est logé, un moyen étant prévu pour empêcher un mouvement de rotation du corps par rapport au boîtier.

2. Mèche selon la revendication 1, où ledit moyen pour empêcher un mouvement relatif de rotation comprend une clavette sous la forme. d'une protubérance sur le corps en plastique qui s'adapte dans une fente dans le boîtier en métal.

3. Mèche selon la revendication 1 ou la revendication 2, où une extrémité du boîtier en métal est filetée extérieurement, le corps en plastique est moulé avec un collier venant de matière pour venir en aboutement contre l'extrémité filetée du boîtier en métal et les parties sont maintenues serrées dans un écrou de verrouillage que est en aboutement avec le collier et est vissé sur le boîtier en métal.

4. Mèche selon l'une quelconque des revendications précédentes, où l'extrémité du boîtier en métal qui est éloignée de la mèche est ouverte.

5. Mèche selon l'une quelconque des revendications précédentes, où le corps en plastique est formé avec au moins un évidement longitudinal dans la queue, l'évidement. s'arrêtant à une courte distance des extrémités du corps.

6. Mèche selon la revendication 5 ayant un alésage entre l'extrémité de l'évidement et l'extrémité du corps au loin de la mèche.

### Patentansprüche

1. Bohrer, bestehend aus einem rohrförmigen Schaft mit unrundem Querschnitt, der an einem Ende eine Hartmetallbohrspitze und am anderen Ende einen Halter aufweist, dessen Außenfläche einen kreisförmigen Querschnitt hat, damit der Bohrer in einem Spannfutter einer Maschine festlegbar ist, wobei der Halter mit Mitteln versehen ist, die den Zutritt einer Spülfüssigkeit zum Ende des Schaftes ermöglichen, so daß die Spülflüssigkeit durch den Schaft der Bohrspitze zugeführt werden kann, dadurch gekennzeichnet, daß der Halter aus einem Körper (13) aus Kunststoff, der durch Umgießen des anderen Endes des Schaftes (11) mit diesem verklebt ist, um eine Relativbewegung zwischen dem Körper und dem Schaft zu verhindern, und aus einem Metallgehäuse (16) besteht, in dem der Körper (13) angeordnet ist, und daß eine Einrichtung (15, 17) vorgesehen ist, die eine Drehbewegung des Körpers (13) gegenüber dem Gehäuse (16) verhindert.

2. Bohrer nach Anspruch 1, dadurch gekennzeichnet, daß die Einrichtung zur Verhinderung einer Relativverdrehung aus einer Paßfeder in Form eines Vorsprungs (15) an dem Kunststoffkörper (13) besteht, die in einen Schlitz (17) des Metallgehäuses (16) eingreift.

3. Bohrer nach Anspruch 1 oder 2, dadurch gekennzeichnet, daß das eine Ende des Metallgehäuses (16) mit einem Außengewinde (18) versehen ist, daß der Kunststoffkörper (13) einen einstrückig gegossenen Kragen (12) aufweist, der an dem Gewindeende des Metallgehäuses (16) anliegt, und daß die Teile in einer Mutter (19) dicht zusammengehalten werden, die an dem Kragen (12) anliegt und auf das Metallgehäuse (16) aufgeschraubt ist.

4. Bohrer nach einem der vorhergehenden Ansprüche, dadurch gekennzeichnet, daß das von der Bohrspitze abgekehrte Ende des Metallgehäuses (16) offen ist.

5. Bohrer nach einem der vorhergehenden Ansprüche, dadurch gekennzeichnet, daß der Kunststoffkörper (13) mit mindestens einer in Längsrichtung des Bohrerschaftes (11) verlaufenden Aussparung versehen ist, die kurz vor den Enden des Körpers endet.

6. Bohrer nach Anspruch 5, gekennzeichnet durch eine zwischen dem Ende der Aussparung (14) und dem von der Bohrer-spitze abgekehrten Ende des Körpers (13) angeordnete Bohrung (21).

Fig.1.

Fig.2.

Fig.3.